# EUROPEAN PATENT SPECIFICATION

(11) **EP 2 003 593 B1**
(45) Date of publication and mention of the grant of the patent: **25.11.2009**
(21) Application number: 07425289.1
(22) Date of filing: 18.05.2007
(51) Int. Cl.: G06K 7/00, G06K 19/077, G01D 9/00

(54) **Apparatus for monitoring environmental parameters**
Gerät zur Überwachung von Umweltparametern
Appareil de surveillance des parametres d'environnement

(43) Date of publication of application: 17.12.2008
(73) Proprietor: Partitalia S.r.L., 20015 Parabiago (MI) (IT); Scanlabs Engineering di Paolo Scanniffio, 20030 Seveso (MI) (IT); Moioli, Mauro, 24022 Alzano Lombardo (BG) (IT)
(72) Inventor: Del Col Balletto, Luca, 20020 Lainate (Milano) (IT); Scanniffio, Paolo, 20030 Seveso (Milano) (IT); Moioli, Mauro, 24022 Alzano Lombardo (Bergamo) (IT)
(74) Representative: Lunati, Vittoriano

(56) References cited:
- EP-A- 0 433 756
- EP-A- 1 308 886
- EP-A- 1 571 634
- EP-A1- 1 691 318
- EP-A2- 1 191 491
- EP-A2- 1 513 043
- WO-A-2005/020127
- WO-A-2005/071364
- US-A- 5 678 562
- US-A1- 2003 189 096
- US-A1- 2004 157 612

## Description

The subject of the present invention is a device for monitoring environmental parameters of the type described in the preamble of Claim 1.

Currently known are different types of electronic devices for monitoring various environmental parameters, such as: temperature, humidity, acidity, acceleration, incident light, and others still.

Similar devices are described, for example in patent applications, EP-A-1571634, WO-A-2005/020127, US-A-2004/157612, US-A-5678562.

Document EP-A-1571634 which is regarded as closest prior art document, shows a recall device which comprises inter alia a camera and an acceleration sensor. For storing the data collected by the camera or by the acceleration sensor a removeable MMC card is in use.

Further, such devices are also used in the transportation of goods.

For example, if perishable goods that are to be maintained in a precise range of temperatures are transported, said monitor devices are transported together with the goods themselves and measure and store, at pre-selected time intervals, the ambient temperature. Reading of the monitor devices makes it possible to know whether the goods have been transported properly or not.

An important and developed technology regarding devices for monitoring environmental parameters is the RFID (Radio-Frequency Identification) technology, which enables a fast reading of the data stored within monitor devices.

In particular, the so-called "RFID tags" are known and widespread.

RFID tags are mainly made up of a chip and an antenna.

The chip includes a non-volatile internal memory, which enables storage of data, whilst the antenna enables transmission of the data from and to the outside world.

In particular, passive, semi-passive, and active RFID tags are known.

Passive RFID tag do not contain any battery or source of electric current.

They are supplied by the same antenna, which, by electromagnetic induction, when it is subjected to a given electromagnetic field, generates an electric current within the chip and retransmits to the outside world the information contained therein.

The above type of RFID tags can constitute a device for monitoring environmental parameters if combined to a purposely provided sensor, equipped with a battery, for sensing said environmental parameter, which transmits to the RFID tag itself the information through generation of electromagnetic fields.

The monitor devices described above which include passive RFID tags present certain important drawbacks. In particular, since the sensor has to generate frequently said electromagnetic fields, the batteries have a short duration.

Instead, active RFID tags comprise, in addition to the chip and antenna, an electric battery.

Said active RFID tags monitor, by means of a sensor and the chip, a given environmental parameter, and, when stimulated by an appropriate external electromagnetic field, emit an appropriate electromagnetic field, generated by means of the internal battery, such as to transmit the information contained within the chip and corresponding to the environmental parameter measured.

Active RFID tags enable long-distance transmission of data; however, they present the drawback of having a short battery life.

Semi-passive RFID tags comprise an internal battery used exclusively for operation of the chip and of the sensor, whilst the transmission of the data uses the electrical energy given by the external electromagnetic field, as occurs in passive RFID tags.

The monitor devices described present the important drawback that they can be deliberately tampered during their activity in order to alter the data contained therein.

A further drawback is constituted by the high cost of use of the devices described.

In the field of transport, for example, a different device is necessary for each load given that the device must be used by the person who checks the load and the person responsible for carrying out loading.

In this situation, the technical aim of the present invention is to develop a device for monitoring environmental parameters that is able to overcome substantially the drawbacks referred to.

Within said technical aim, an important purpose of the invention is to develop a device for monitoring environmental parameters that enables a long battery life and a convenient control of the data entered into the device.

Another important purpose of the invention is to provide a device for monitoring environmental parameters that is able to prevent possible tampering with the information present within the device itself.

Not the least important purpose of the present patent is to provide a device for monitoring environmental parameters that enables an inexpensive use of the monitor device.

The technical aim and the purposes specified are achieved by a device for monitoring environmental parameters as specified in the annexed independent claim 1.

Preferred embodiments are highlighted in the subclaims.

In the attached plates of drawings, preferred embodiments of the invention are shown by way of example. Namely:

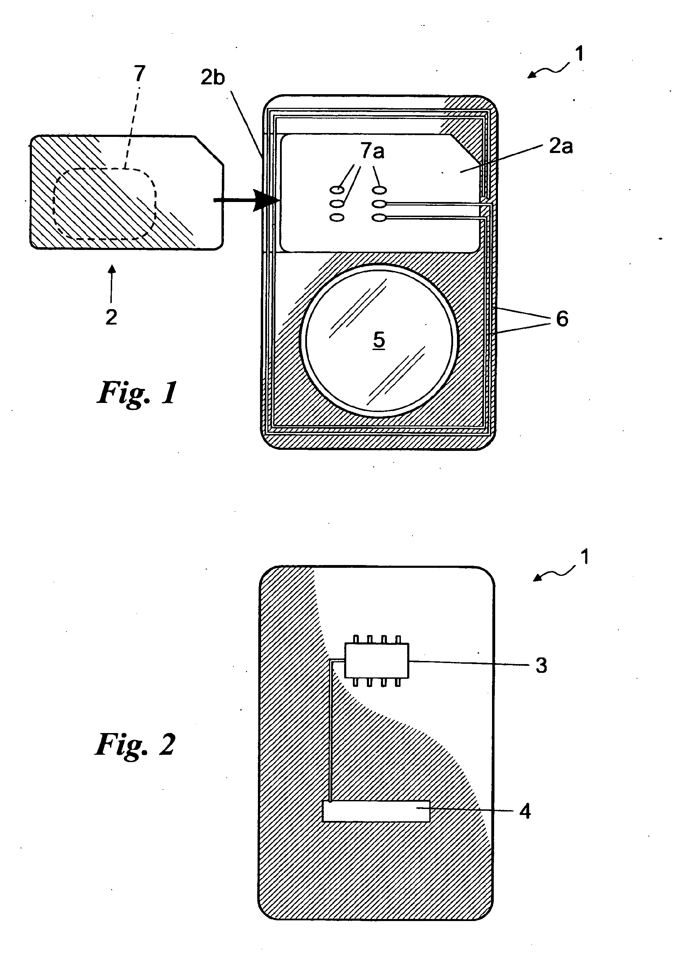

**Figure 1** shows a top plan view of the device according to the invention;
**Figure 2** shows a view from beneath of the device according to the invention; and

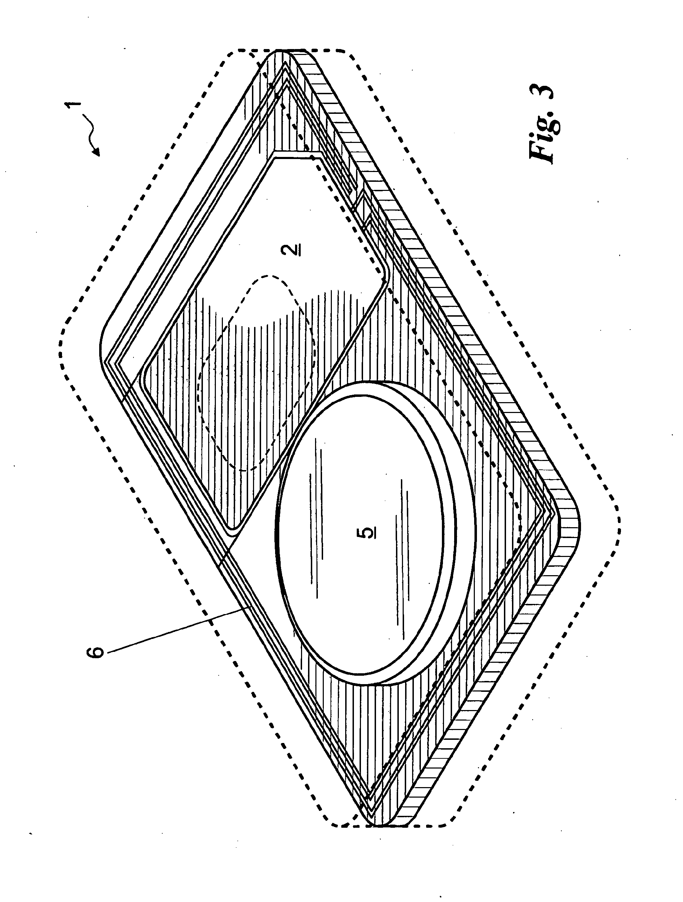

**Figure 3** is a schematic axonometric view of the components of the device according to the invention.

With reference to the figures, the device according to the invention is designated as a whole by the reference number **1.**

Said device is designed to monitor an environmental parameter and to store it in a purposely provided mass memory.

Different environmental parameters can be measured, such as, for example, the temperature, humidity, pressure, acidity, acceleration of the system and others still. In addition, a number of environmental parameters can be measured simultaneously.

The device 1 comprises, broadly speaking, a housing **2a** for a storage unit **2,** a microprocessor **3,** a sensor **4** for detecting environmental parameters, an electric battery **5** and an antenna **6,** designed to receive and emit information via electromagnetic waves from and to the outside of the device 1.

The storage unit 2 comprises a mass memory and a safety logic.

Said storage unit can be inserted into the purposely provided housing 2a and can be removed therefrom by means of a purposely provided opening for insertion **2b** or different devices of a known type.

Said storage unit 2 comprises second electrical-connection means **7,** that enable electrical connection to electrical-connection means **7a** present inside the housing 2b.

The electrical-connection means 7a hence set in electrical communication the storage unit 2 with the device 1.

In particular, the storage unit 2 is constituted by a device known as "smart card" and, more in particular, by a type of smart card known as "SIM (Subscriber Identity Module) card".

Said SIM cards, in fact, include a mass memory that can vary from tens of kilobytes to a gigabyte, and a safety logic that enables protection of the SIM card in reading by means of a password and moreover a second level of protection of said SIM card in writing, represented by a second password.

In addition, the storage unit 2 is designed to communicate both by means of electrical connections and by means of electromagnetic waves.

In fact, the storage unit 2, when it is inserted within the device 1, through the connection means 7a, is electrically connected to the microprocessor 3 and is moreover electrically connected, once again through the connection means 7a, to the antenna 6, through which is able to communicate to the outside world by transmission of electromagnetic waves.

The transmission of electromagnetic waves moreover occurs preferably, and conveniently, at high frequencies, and in particular at a frequency of 13.56 MHz, universally used for passive RFID devices. Preferably, the frequencies comply with the standard ISO 14443 Type B and Type A (carrier at 13.56 MHz) or ISO/IEC 18092 passive mode (SONY FeliCa® communication interface).

Smart cards, and hence SIM cards, which enable a transmission of data both via electrical connections and via transmission of electromagnetic waves are referred to as "dual-interface smart cards", or else as "dual-interface SIM cards". In addition, said smart cards or SIM cards are referred to as "multi-interface" if they generally enable more than one method of data transmission.

In particular, the company Watchdata produces a dual-interface SIM card under the brand name SIMPass.

Alternatively, the antenna 6 can also be comprised within the same storage unit 2. In this case, said antenna 6 is directly connected to the unit 2 itself, without passing through the connection means 7a.

Said antenna 6 can be of an active or passive type.

In particular, in the case where said antenna 6 is of a passive type, the electrical energy for emission of electromagnetic waves to the outside world is supplied by given electromagnetic waves emitted towards said antenna, as occurs in known passive RFIDs.

Otherwise, in the case where said antenna 6 is of a passive type, the electrical energy for emission of electromagnetic waves to the outside world is supplied by the battery 5.

Two antennas 6 may moreover be present, one for reception and one for transmission.

The device 1 comprises, then, the microprocessor 3 and the sensor 4.

In particular, the microprocessor 3 comprises a system clock and is designed to control and issue commands to the sensor 4 and the storage unit 2 and to transfer data through said elements.

Said microprocessor is electrically connected to the storage unit 2 and to the connection means 7a so that communication between said microprocessor 3 and the storage unit 2 is fast and entails a low energy expenditure.

Finally, the microprocessor 3 is electrically connected to the battery 5, and supplied thereby.

The sensor 4 can be of different types according to the environmental parameter that is to be monitored. In particular, it can be constituted by a thermometer, a hygrometer, a photometer, an accelerometer, or other sensors of a known type.

Furthermore, a number of sensors 4 or else one sensor 4 can be provided, designed to detect a plurality of environmental parameters.

The sensor 4 is electrically connected to the microprocessor 3 and is hence connected also to the storage unit 2, via the connection means 7a, and is supplied by the battery 5.

Operation of the device 1, described above from a structural standpoint, is outlined hereinafter.

The device 1 comprising the storage unit 2 is set in the environment in which it is to monitor one or more parameters.

The microprocessor 3 controls the device 1 itself and, at every given time interval, detects a measurement of said parameter by the sensor 4 and stores it in the storage unit 2.

The storage unit 2 can be read and written from the outside by means of the antenna 6 according to the known modes of operation of active or passive RFIDs, as described previously.

In addition, the storage unit 2 can be taken out and read, or written, also by means of an external reader, in particular a SIM-card reader.

The environmental parameters can then be monitored also in the absence of the device 1, via the storage unit 2. In this case, data regarding the environmental parameters can only be monitored and not modified. Consequently, the device 1 can be used, together with a new storage unit 2, whilst the first storage unit 2 is controlled by a second user.

To access the SIM card, and hence to modify the data present therein, it is necessary to access it via the safety logic; it is, therefore, accessible only by an authorized person who knows the passwords.

In particular, it is possible to set different passwords or levels of protection in reading and writing.

The invention enables important advantages to be achieved.

In fact, the device 1 for monitoring environmental parameters enables a long battery life on account of the fact that the communications with the outside world can occur via reading of the storage unit 2 rather than via generation of electromagnetic waves.

In addition, the communications between the storage unit 2, the sensor **4,** the antenna 6, and the microprocessor 3 occur via electrical connections; hence, they enable a considerable energy saving as compared to connections via electromagnetic waves.

Yet another advantage is represented by the fact that the antenna 6 communicates at a frequency of 13.56 MHz. Said frequency is standard and very widely used. There hence exist on the market inexpensive devices able to communicate at said frequency.

In addition, the device 1 for monitoring environmental parameters is able to prevent any tampering, on account of the safety logic present within the SIM card and the storage unit 2.

Finally, the control device 1 enables an economic saving, given that it can be used simultaneously with control of a storage unit 2 previously used, as described above.

In fact, the storage unit 2, and in particular the SIM card, are inexpensive in proportion to the device 1 as a whole.

All the items can be replaced by equivalent elements, and the materials, the shapes, and the dimensions can be any whatsoever.

## Claims

1. A device (1) for monitoring environmental parameters, comprising: a microprocessor (3); a sensor (4) for detecting said environmental parameter, electrically connected to said microprocessor (3); an electric battery (5), connected at least to said microprocessor (3); an antenna (6), designed to receive and emit information via electromagnetic waves from and to the outside of said monitor device (1); a storage unit (2), substantially constituted by a smart card including a mass memory; and a housing (2a) for said storage unit (2), comprising means (7a) for electrical connection with said storage unit (2), electrically connected to said microprocessor (3) and to said antenna (6); said device (1) being **characterized in that** said storage unit (2) is a smart card of a multi-interface type and **in that** said antenna (6) is designed to supply to said device (1), when stimulated by given electromagnetic waves, the electrical energy for emission of electromagnetic waves.

2. The device according to Claim 1, in which said storage unit (2) can be removably inserted in said housing (2a).

3. The device according to Claim 2, comprising an opening (2b) for inserting said storage unit (2) in said housing (2a).

4. The device according to Claim 1, in which said storage unit (2) comprises a safety logic.

5. The device according to one or more of the preceding claims, in which said storage unit (2) is a SIM card of a dual-interface type.

6. The device according to one or more of the preceding claims, in which said antenna (6) communicates at a frequency of 13.56 MHz.

7. The device according to claim 6, in which said antenna (6) communicates at frequencies comply with the standard ISO 14443.

8. The device according to one or more of the preceding claims, in which said antenna (6) is integrated in said storage unit (2).

## Patentansprüche

1. Vorrichtung zur Überwachung (1) von Umweltparametern bestehend aus einem Mikroprozessor (3), einem mit genanntem Mikroprozessor (3) elektrisch verbundenen Sensor (4) des genannten Umweltparameters, einer mindestens an genannten Mikroprozessor (3) angeschlossenen Strombatterie (5), einer geeigneten Antenne (6) für den Empfang und die Abgabe mittels elektromagnetischer Wellen von Informationen von und zum Äußeren der genannten Vorrichtung zur Überwachung (1), einer Speichereinheit (2), im wesentlichen bestehend aus einer Chipkarte, die einen Massenspeicher umfasst, einem Gehäuse (2a) für genannte Speichereinheit (2) einschließlich elektrischer Verbindungsmitteln (7a) zu genannter Speichereinheit (2), die mit genanntem Mikroprozessor (3) und genannter Antenne (6) elektrisch verbunden sind, wobei genannte Vorrichtung (1) **dadurch gekennzeichnet ist, dass** genannte Speichereinheit (2) eine Chipkarte der Art Multi-Interface ist und dass genannte Antenne (6), wenn von bestimmten elektromagnetische Wellen beansprucht, in der Lage ist, an genannte Vorrichtung (1) den Strom zum Aussenden von elektromagnetischen Wellen zu liefern.

2. Vorrichtung nach Anspruch 1, in der genannte Speichereinheit (2) in genanntes Gehäuse (2a) auf lösbare Weise eingesetzt ist.

3. Vorrichtung nach Anspruch 2, die eine Öffnung zum Einsetzen (2b) genannter Speichereinheit (2) in genanntes Gehäuse (2a) umfasst.

4. Vorrichtung nach Anspruch 1, in der genannte Speichereinheit (2) eine Sicherheitslogik umfasst.

5. Vorrichtung nach einem oder mehreren der vorstehenden Ansprüche, in der genannte Speichereinheit (2) eine SIM-Karte der Art Dual-Interface ist.

6. Vorrichtung nach einem oder mehreren der vorstehenden Ansprüche, in der genannte Antenne (6) bei einer Frequenz von 13.56 MHz überträgt.

7. Vorrichtung nach Anspruch 6, in der genannte Antenne (6) bei Frequenzen nach ISO 14443 Standards überträgt.

8. Vorrichtung nach einem oder mehreren der vorstehenden Ansprüche, in der genannte Antenne (6) in genannte Speichereinheit (2) integriert ist.

## Revendications

1. Dispositif de contrôle (1) de paramètres environnementaux comprenant un microprocesseur (3), un capteur (4) dudit paramètre environnemental relié électriquement audit microprocesseur (3), une batterie électrique (5) reliée au moins audit microprocesseur (3), une antenne (6) pouvant recevoir et émettre des informations par ondes électromagnétiques en provenance et en direction de l'extérieur dudit dispositif de contrôle (1), une unité de mémorisation (2) composée substantiellement d'une smart card incluant une mémoire de masse, un logement (2a) pour ladite unité de mémorisation (2) comprenant des moyens de connexion électrique (7a) avec ladite unité de mémorisation (2) reliés électriquement audit microprocesseur (3) et à ladite antenne (6) ; ledit dispositif (1) étant **caractérisé par le fait que** ladite unité de mémorisation (2) est une Smart card de type interface multiple et **par le fait que** ladite antenne (6) est capable de fournir audit dispositif (1), lorsqu'elle est sollicitée par des ondes électromagnétiques déterminées, l'énergie électrique pour l'émission d'ondes électromagnétiques.

2. Dispositif selon la revendication 1, où ladite unité de mémorisation (2) peut être insérée de façon amovible dans ledit logement (2a).

3. Dispositif selon la revendication 2, comprenant une ouverture d'insertion (2b) de ladite unité de mémorisation (2) dans ledit logement (2a).

4. Dispositif selon la revendication 1, où ladite unité de mémorisation (2) comprend une logique de sécurité.

5. Dispositif selon une ou plusieurs des revendications précédentes, où ladite unité de mémorisation (2) est une carte SIM de type double interface.

6. Dispositif selon une ou plusieurs des revendications précédentes, où ladite antenne (6) communique à une fréquence de 13,56 MHz.

7. Dispositif selon la revendication 6, où ladite antenne (6) communique à des fréquences respectant les normes ISO 14443.

8. Dispositif selon une ou plusieurs des revendications précédentes, où ladite antenne (6) est intégrée dans ladite unité de mémorisation (2).
